# EUROPÄISCHE PATENTSCHRIFT

(11) **EP 3 745 054 B1**
(45) Veröffentlichungstag und Bekanntmachung des Hinweises auf die Patenterteilung: **23.11.2022**
(21) Anmeldenummer: 20177044.3
(22) Anmeldetag: 28.05.2020
(51) Int. Cl.: F25B 47/02, F25B 49/02, F25D 21/08

(54) **KÜHL- UND/ODER GEFRIERGERÄT**
FRIDGE AND / OR FREEZER
APPAREIL DE REFROIDISSEMENT ET/OU DE CONGÉLATION

(30) Priorität: 29.05.2019 DE 102019114484; 11.07.2019 DE 102019118784
(43) Veröffentlichungstag der Anmeldung: 02.12.2020
(73) Patentinhaber: Liebherr-Hausgeräte Ochsenhausen GmbH, 88416 Ochsenhausen (DE)
(72) Erfinder: Ertel, Thomas, 88299 Leutkirch (DE); Schick, Michael, 88471 Baustetten (DE)
(74) Vertreter: Herrmann, Uwe

(56) Entgegenhaltungen:
- DE-A1-102006 003 827
- US-A1- 2013 019 617
- US-A1- 2018 238 603

## Beschreibung

Die Erfindung betrifft ein Kühl- und/oder Gefriergerät, in dem ein Konzept zur Verwendung von Wärme aus dem Kompressor und dem Verflüssiger zum Abtauen des Verdampfers verwirklicht ist.

Das sich aufgrund der Luftfeuchtigkeit am Verdampfer im Innenraum eines Kühl- und/oder Gefriergeräts mit einem Kältemittelkreislauf anlagernde Wasser kann im Verlauf des Kühlbetriebs gefrieren, was zu einem fortlaufenden Vereisen des Verdampfers führt. Um Effizienzverluste durch ein solches Vereisen zu vermeiden, können regelmäßig Abtauzyklen vorgesehen sein, in denen die Temperatur an der Oberfläche des Verdampfers durch eine Abtauheizung oder das Einleiten von warmem Kältemittel auf eine Temperatur oberhalb des Gefrierpunktes gehoben wird, sodass das Eis schmilzt und als Tauwasser vom Verdampfer abfließt. Das Tauwasser wird dann typischerweise in einer unterhalb des Verdampfers angeordneten Tauwasserrinne aufgefangen und anhand einer Tauwasserleitung aus dem Geräteinnenraum in eine außerhalb des Geräteinnenraums angeordnete Tauwasserschale geleitet, wo es verdunsten kann.

Die Temperaturerhöhung des Verdampfers während eines Abtaubetriebs wird im Haushaltsbereich typischerweise anhand einer elektrischen Abtauheizung durchgeführt, bei der es sich um eine elektrische Widerstandsheizung handelt.

Im Gewerbebereich ist teilweise die Abtauung mit Kältemittelumwälzung und Kreislaufumkehr üblich, dabei wird jedoch in der Regel der Verflüssiger durch einen Bypass umgangen. Die zur Abtauung benötigte Wärme wird vom Kompressor erzeugt. Ein Beispiel für eine Ausbildung des Kältemittelkreislaufs, mit dem warmes Kältemittel über einen Bypass in den Verflüssiger geleitet wird, ist in der DE 10 2014 001 929 A1 offenbart. US 2013/019617 A1 offenbart ein Kühlgerät gemäß dem Oberbegriff des Anspruchs 1.

Aufgabe der Erfindung ist es, ein Konzept zur möglichst energieeffizienten Abtauung eines Verdampfers aufzufinden, das sich ohne Zusatzbauteile am Gerät verwirklichen lässt.

Vor diesem Hintergrund betrifft die Erfindung ein Kühl- und/oder Gefriergerät gemäß dem Anspruch 1.

Im Rahmen des derartigen Abtaubetriebs des Kältemittelkreislaufs steigt die Verdampfertemperatur an und kann den Gefrierpunkt übersteigen, wodurch am Verdampfer angelagertes Eis abgetaut werden kann.

Als niedrige Drehzahl ist im Zusammenhang mit der beanspruchten Erfindung eine Drehzahl zu verstehen, die unterhalb der Drehzahl liegt, mit welcher der Kompressor im normalen Kühlbetrieb durchschnittlich betrieben wird. Beispielsweise kann es sich um die geringste Stufe handeln, für die der Kompressor ausgelegt ist. In einer Ausführungsvariante ist die Drehzahl bei 1300 U/min oder weniger.

Der große Durchflussquerschnitt korrespondiert vorzugsweise zum größten Durchflussquerschnitt, der am Ventil eingestellt werden kann, bzw. beträgt mindestens 80% und vorzugsweise mindestens 90% dieses größten einstellbaren Durchflussquerschnitts. Jedenfalls liegt er oberhalb des Durchflussquerschnitts, welchen das Expansionsventil im normalen Kühlbetrieb bzw. während der Kühlphasen im Durchschnitt einnimmt. Generell sollte das Ventil so ausgebildet sein, dass sein Durchflussquerschnitt so groß eingestellt werden kann, dass im Verdampfer keine oder kaum eine Kältemittelexpansion mehr stattfindet.

Regelbare Expansionsventile sind aus der WO 2018/104391 A1 bekannt. Das dort vorgestellte Mikroexpansionsventil, das sich für einen Einsatz im Rahmen der hier beschriebenen Erfindung eignet, kann an Stelle einer Kapillare als Drosselorgan in ein Kühl- und/oder Gefriergerät eingebaut werden. Es kann in einer Stellung über einen sehr großen Durchflussquerschnitt verfügen.

Vorzugsweise weist der Kältemittelkreislauf keine Bypassleitung auf, die vom Kompressor an Verflüssiger und/oder Drossel vorbei direkt zum Verdampfer führt. Da mit dem drehzahlgeregelten Kompressor und mit dem regelbaren Expansionsventil beim Einleiten von warmem Kältemittel in den Verdampfer auf ohnehin im Kältemittelkreislauf vorhandene Komponenten zurückgegriffen wird, sind zur Ermöglichung eines Abtaubetriebs anders als im in der DE 10 2014 001 929 A1 offenbarten Kreislauf keine Zusatzbauteilen am Gerät erforderlich.

In einer bevorzugten Weiterbildung weist das erfindungsgemäße Kühl- und/oder Gefriergerät einen außerhalb des Innenraums angeordneten Verflüssigerventilator auf, der im Betrieb den Verflüssiger mit einem Luftstrom beaufschlagen kann, wobei der Verflüssigerventilator mit der Steuereinheit in Verbindung steht und wobei die Steuereinheit ausgebildet ist, während des Abtauzyklus den Verflüssigerventilator nicht zu betreiben. Durch die Nichtbelüftung des Verflüssigers wird am Verflüssiger weniger Wärme abgeführt, sodass im Kältemittel mehr Wärme für das Abtauen des Verdampfers zur Verfügung steht.

Des Weiteren weist das erfindungsgemäße Kühl- und/oder Gefriergerät in einer bevorzugten Weiterbildung einen im Innenraum angeordneten Verdampferventilator auf, der im Betrieb den Verdampfer mit einem Luftstrom beaufschlagen kann, wobei der Verdampferventilator mit der Steuereinheit in Verbindung steht und wobei die Steuereinheit ausgebildet ist, während des Abtauzyklus den Verdampferventilator nicht zu betreiben. Durch die Nichtbelüftung des Verdampfers wird der Anteil der Wärme, die der im Rahmen des Abtaubetriebs geheizte Verdampfer an den Innenraum abgibt, gering gehalten.

Weiterhin bevorzugt ist eine Ausbildung der Steuereinheit derart, dass der Kompressor vor oder während des Abtauzyklus durch einen ineffizienten Betrieb oder eine Bestromung im Stillstand erwärmt wird. Der ineffiziente Betrieb zeichnet sich durch einen im Vergleich zum Wirkungsgrad während des normalen Kühlbetriebs geringeren Wirkungsgrad aus. Im Rahmen der Erfindung kann also vorgesehen sein, durch eine ineffiziente Betriebsweise vor oder während der Abtauphase zusätzlich Wärme zu erzeugen, die dann im Kompressor und Verflüssiger gespeichert wird. Der ineffiziente Betrieb kann durch eine suboptimale zeitliche Abfolge der Bestromung der Spulen des Elektromotors durch den Inverter realisiert werden, oder es kann bei stehendem Kompressor Strom durch die Spulen des Elektromotors geleitet werden. Ein Beispiel für die Schaltung eines ineffizienten Kompressorbetriebs ist in der DE 10 2012 213 468 A1 offenbart.

In einer Ausführungsvariante umfasst das Gerät einen Temperaturfühler zur Ermittlung der Verdampfertemperatur, vorzugsweise der Oberflächentemperatur des Verdampfers, der mit der Steuereinheit in Verbindung steht.

Das Gerät kann zusätzlich eine elektrische Abtauheizung, vorzugsweise eine elektrische Widerstandsheizung am Verdampfer und/oder an einer oder mehreren zur Vereisung neigenden Stellen, insbesondere am Tauwasserablauf aufweisen, die mit der Steuereinheit in Verbindung steht. Dabei kann die Steuereinheit ausgebildet sein, den Betrieb der Widerstandsheizung so zu regeln, dass sie während des Abtauzyklus zusätzlich aktiviert wird, vorzugsweise dann, wenn die erreichte Verdampfertemperatur eines oder mehrere in der Steuereinheit hinterlegte Kriterien nicht erfüllt. Beispielsweise kann das Erreichen einer Schwellentemperatur, gegebenenfalls nach Ablauf einer gewissen Anlaufzeit, als Kriterium herangezogen werden. So kann etwa die elektrische Abtauheizung zugeschaltet werden, wenn die Schwellentemperatur nach der Durchführung des Kältemittel-Abtaubetriebs für eine gewisse Zeitspanne nicht erreicht wird. Ferner kann der Verlauf der Verdampfertemperatur als Kriterium herangezogen werden. So kann etwa die elektrische Abtauheizung zugeschaltet werden, wenn die Verdampfertemperatur trotz fortlaufenden Abtaubetriebs wieder sinkt, beispielsweise weil die im Verflüssiger und Kompressor gespeicherte Wärme zu einem gewissen Grad verbraucht wurde.

Erfindungsgemäß ist die Steuereinheit ausgebildet, nach Durchführung des Abtauzyklus bei Kompressorstillstand eine Ruhephase einzuleiten, bevor der Kühlbetrieb wieder aufgenommen wird. Die Ruhephase kann beispielsweise einsetzen, wenn der Verdampfer im Rahmen des Abtaubetriebs eine bestimmte Schwellentemperatur erreicht hat oder für eine bestimmte Zeit oberhalb einer Schwellentemperatur gelegen hat. Während der Ruhephase kann Tauwasser vom Verdampfer abfließen. Die Ruhephase kann in einer Ausführungsvariante beendet werden, sobald die Verdampfertemperatur wieder einen bestimmten Schwellenwert, beispielsweise 0°C unterschritten hat.

Auch kann die Steuereinheit ausgebildet sein, vor Durchführung des Abtauzyklus den Kompressor ineffizient zu betreiben, um diesen aufzuheizen. Während dieses Heizbetriebs des Kompressors wird das Ventil allerdings noch nicht auf den großen Durchflussquerschnitt geöffnet, sodass der Abtaubetrieb noch nicht beginnt. Beispiele für ineffiziente Kompressorbetriebsarten wurden bereits weiter oben näher erläutert.

Bei dem Gerät kann es sich um ein reines Kühlgerät, ein reines Gefriergerät oder ein Kühl- und Gefrier-Kombinationsgerät handeln. Auch kann vorgesehen sein, dass die Temperatur des Innenraums oder die Temperatur einzelner Zonen des Innenraums variabel eingestellt werden kann, sodass das Gerät wahlweise als reines Kühlgerät, reines Gefriergerät oder Kühl- und Gefrier-Kombinationsgerät betrieben werden kann.

Weitere Einzelheiten und Vorteile der Erfindung ergeben sich aus dem nachfolgend anhand der Figuren beschriebenen Ausführungsbeispiel. In den Figuren zeigen:
- Figur 1:: eine schematische Darstellung eines Kältemittelkreislaufs eines erfindungsgemäßen Kühl- und/oder Gefriergeräts; und
- Figur 2:: ein Flussdiagramm, das den Ablauf bei der Durchführung eines Abtauzyklus in einem erfindungsgemäßen Kühl- und/oder Gefriergerät zeigt.

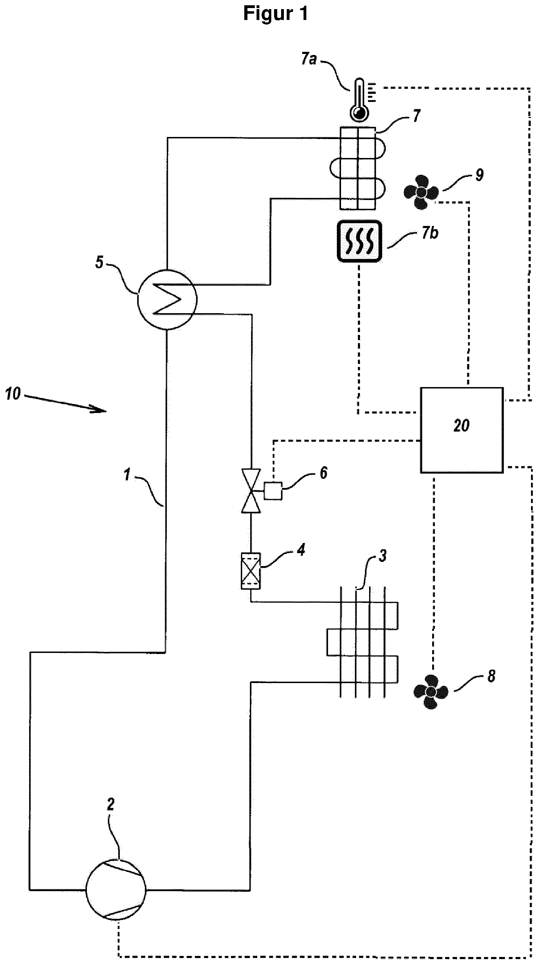

In Figur 1 wird ein Kältemittelkreislauf 10 gezeigt, wie er in einem erfindungsgemäßen Kühl- und/oder Gefriergerät zum Einsatz kommt. Der Kältemittelkreislauf umfasst eine Kältemittelleitung 1, einen Kompressor 2, einen Verflüssiger 3, einen Trockner 4, einen Wärmetauscher 5, ein Expansionsventil 6 und einen Verdampfer 7. Zwischen der Druckseite des Kompressors 2 und dem Expansionsventil 6 befindet sich der Hochdruckabschnitt des Kältemittelkreislaufs 10. Zwischen dem Expansionsventil 6 und der Saugseite des Kompressors 2 befindet sich der Niedrigdruckabschnitt des Kältemittelkreislaufs 10. Am Verdampfer 7 ist ein Temperaturfühler 7a zur Messung der Oberflächentemperatur des Verdampfers 7 angeordnet. Des Weiteren ist am Verdampfer 7 eine elektrische Abtauheizung 7b angeordnet.

Der Verdampfer 7 ist innerhalb des vom wärmeisolierten Gerätekorpus umgebenen Innenraums des Geräts angeordnet, beispielsweise an oder hinter der Wand des Innenbehälters. Der Verflüssiger 3 ist außerhalb des vom wärmeisolierten Gerätekorpus umgebenen Innenraums angeordnet. Das Gerät kann einen Maschinenraum aufweisen, in welchem der Kompressor 2, der Verflüssiger 3 und das Expansionsventil 6 angeordnet sind. Der Maschinenraum kann in einem Sockelbereich des Kühl- und/oder Gefriergeräts angeordnet sein.

Das Gerät weist außerdem einen außerhalb des Innenraums angeordneten Verflüssigerventilator 8 auf, der im Betrieb den Verflüssiger 3 mit einem Luftstrom beaufschlagen kann, sowie einen im gekühlten Innenraum angeordneten Verdampferventilator 9 auf, der im Betrieb den Verdampfer 7 mit einem Luftstrom beaufschlagen kann.

Bei dem Kompressor 2 handelt es sich um einen drehzahlgeregelten Kompressor, der mit variabler Drehzahl betrieben werden kann. Bei dem Expansionsventil 6 handelt es sich um ein solches mit regelbarem Durchflussquerschnitt.

Das Gerät umfasst zudem eine Steuereinheit 20, die mit dem drehzahlgeregelten Kompressor 2, dem regelbaren Expansionsventil 6, dem Temperaturfühler 7a, der elektrischen Abtauheizung 7b, dem Verflüssigerventilator 8 und dem Verdampferventilator 9 in Verbindung steht.

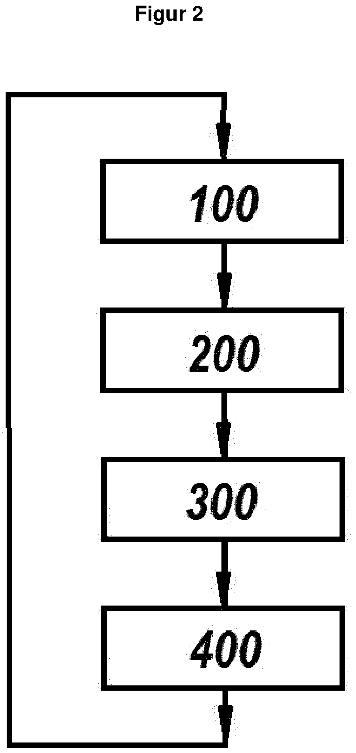

Gemäß der Erfindung ist die Steuereinheit 20 ausgebildet, ein Abtauzyklus durchzuführen, dessen Ablauf in Figur 2 schematisch dargestellt ist.

Vor Beginn des eigentlichen Abtauzyklus wird ein Heizschritt 100 durchgeführt, in welchem der Kompressor 2 ineffizient betrieben wird, indem die Spulen des Elektromotors des Kompressors 2 in einem ineffizienten Takt bestromt werden. Dabei wärmen sich der Kompressor 2 und mit ihm das Kältemittel im Verflüssiger 3 sowie der Verflüssiger 3 auf. Der Verflüssigerventilator 8 wird in diesem Schritt abgeschaltet und der Verdampferventilator 9 wird normal weiterbetrieben. Das Expansionsventil 6 wird bei kleinem Durchflussquerschnitt gehalten.

Im eigentlichen Abtauschritt 200 wird dann der Kompressor 2 wieder normal effizient, jedoch bei der niedrigstmöglichen Drehzahl betrieben, und das Expansionsventil 6 wird auf den größtmöglichen Durchflussquerschnitt gestellt, um den Druckabfall am Expansionsventil gering zu halten und eine Kältemittelexpansion im Verdampfer weitgehend zu unterbinden. Der Verflüssigerventilator 8 und der Verdampferventilator 9 werden während des Abtauzyklus beide nicht betrieben. Sollte die so bewirkte Einleitung von warmem Kältemittel nicht ausreichen, um eine Schwellentemperatur am Verdampfer 7 zu erreichen, was anhand des Temperaturfühlers 7a überwacht wird, kann die elektrische Abtauheizung 7b zugeschaltet werden.

Nachdem der Verdampfer 7 im Rahmen des Abtaubetriebs 200 eine bestimmte Schwellentemperatur erreicht hat, was anhand des Temperaturfühlers 7a ermittelt wird, setzt eine Ruhephase 300 ein, in der beide Ventilatoren 8 und 9 abgeschaltet bleiben und der Kompressor 2 abgeschaltet wird. Das Expansionsventil 6 wird auf einen kleinen Durchflussquerschnitt zurückgestellt oder geschlossen. Während der Ruhephase 300 kann Tauwasser vom Verdampfer 7 abfließen. Die Ruhephase 300 dauert an, bis die vom Temperaturfühler 7a gemessene Verdampfertemperatur wieder einen bestimmten Schwellenwert, beispielsweise 0°C unterschreitet.

Sodann startet wieder der normale Kühlbetrieb 400, in welchem der Kompressor 2 energieeffizient betrieben wird, das Expansionsventil 6 auf einen kleinen Durchflussquerschnitt gestellt ist und beide Ventilatoren 8 und 9 betrieben werden. Der Kühlbetrieb 400 wird typischerweise immer wieder unterbrochen, sodass die Kühlraumtemperatur innerhalb eines gewissen Temperaturbereichs schwankt.

Wenn eine bestimmte Zeitspanne abgelaufen und der Verdampfer 7 wieder vereist ist, kann ein Betrieb in der Schrittabfolge 100-200-300 erneut einsetzen.

Gemäß der Erfindung kann also ein regelbares Expansionsventil 6 in Verbindung mit einem drehzahlgeregelten Kompressor 2 dazu genutzt werden, die Abtauung des Verdampfers 7 ganz oder teilweise mit Wärme durchzuführen, die im Verflüssiger 3 bzw. im Kompressor 2 gespeichert ist. Die übrigen Komponenten des Kältemittelkreislaufs 10 und auch die Ventilatoren 9 und 8 am Verdampfer 7 und am Verflüssiger 3 werden dabei so angesteuert, dass möglichst wenig Kältemittel verflüssigt wird bzw. im Verdampfer 7 verdampft.

Zur Umsetzung des Konzepts sind im Vergleich zu einem Gerät, das bereits ein durchflussregelbares Expansionsventil 6 und einen drehzahlgeregelten Kompressor 2 aufweist, keine weiteren Teile notwendig.

## Patentansprüche

1. Kühl- und/oder Gefriergerät mit einem wärmeisolierten Gerätekorpus, der einen Innenraum umschließt, und mit einer Wärmepumpe, anhand welcher der Innenraum gekühlt werden kann, wobei es sich bei der Wärmepumpe um einen Kältemittelkreislauf (10) mit Kompressor (2), Verflüssiger (3), Drossel und Verdampfer (7) handelt, wobei es sich bei dem Kompressor (2) um einen drehzahlgeregelten Kompressor (2) handelt, der mit variabler Drehzahl betrieben werden kann, wobei es sich bei der Drossel um ein Expansionsventil (6) mit regelbarem Durchflussquerschnitt handelt, und wobei das Gerät eine Steuereinheit (20) aufweist, die mit dem drehzahlgeregelten Kompressor (2) und dem regelbaren Expansionsventil (6) in Verbindung steht, wobei die Steuereinheit (20) ausgebildet ist, einen Abtauzyklus durchzuführen, in dem der Kompressor (2) mit niedriger Drehzahl betrieben und das Expansionsventil (6) auf einen großen Durchflussquerschnitt gestellt wird, um warmes Kältemittel in den Verdampfer (7) zu leiten und das Ausmaß der Kältemittelverdampfung im Verdampfer (7) gering zu halten oder zu vermeiden,
**dadurch gekennzeichnet, dass** die Steuereinheit (20) ausgebildet ist, nach Durchführung des Abtauzyklus bei Kompressorstillstand eine Ruhephase einzuleiten, bevor der Kühlbetrieb wieder aufgenommen wird.

2. Kühl- und/oder Gefriergerät nach Anspruch 1, **dadurch gekennzeichnet, dass** der Kältemittelkreislauf (10) keine Bypassleitung aufweist, die vom Kompressor (2) an Verflüssiger (3) und/oder Drossel vorbei direkt zum Verdampfer (7) führt.

3. Kühl- und/oder Gefriergerät nach einem der vorhergehenden Ansprüche, **dadurch gekennzeichnet, dass** das Gerät einen außerhalb des Innenraums angeordneten Verflüssigerventilator (8) aufweist, der im Betrieb den Verflüssiger (3) mit einem Luftstrom beaufschlagen kann, wobei der Verflüssigerventilator (8) mit der Steuereinheit (20) in Verbindung steht und wobei die Steuereinheit (20) ausgebildet ist, während des Abtauzyklus den Verflüssigerventilator (8) nicht zu betreiben.

4. Kühl- und/oder Gefriergerät nach einem der vorhergehenden Ansprüche, **dadurch gekennzeichnet, dass** das Gerät einen im Innenraum angeordneten Verdampferventilator (9) aufweist, der im Betrieb den Verdampfer (9) mit einem Luftstrom beaufschlagen kann, wobei der Verdampferventilator (9) mit der Steuereinheit (20) in Verbindung steht und wobei die Steuereinheit (20) ausgebildet ist, während des Abtauzyklus den Verdampferventilator (9) nicht zu betreiben.

5. Kühl- und/oder Gefriergerät nach einem der vorhergehenden Ansprüche, **dadurch gekennzeichnet, dass** die Steuereinheit (20) ausgebildet ist, den Kompressor (2) vor oder während des Abtauzyklus durch einen ineffizienten Betrieb oder eine Bestromung im Stillstand zu erwärmen.

6. Kühl- und/oder Gefriergerät nach einem der vorhergehenden Ansprüche, **dadurch gekennzeichnet, dass** das Gerät einen Temperaturfühler (7a) zur Ermittlung der Verdampfertemperatur, vorzugsweise der Oberflächentemperatur des Verdampfers (7) aufweist, der mit der Steuereinheit (20) in Verbindung steht.

7. Kühl- und/oder Gefriergerät nach einem der vorhergehenden Ansprüche, **dadurch gekennzeichnet, dass** das Gerät zusätzlich eine elektrische Abtauheizung (7b), vorzugsweise eine elektrische Widerstandsheizung am Verdampfer und/oder an einer oder mehreren zur Vereisung neigenden Stellen, insbesondere am Tauwasserablauf aufweist, die mit der Steuereinheit (20) in Verbindung steht.

8. Kühl- und/oder Gefriergerät nach Anspruch 7, **dadurch gekennzeichnet, dass** die Steuereinheit (20) ausgebildet ist, den Betrieb der Widerstandsheizung so zu regeln, dass sie während des Abtauzyklus zusätzlich aktiviert wird, vorzugsweise dann, wenn die erreichte Verdampfertemperatur eines oder mehrere in der Steuereinheit (20) hinterlegte Kriterien nicht erfüllt.

9. Kühl- und/oder Gefriergerät nach einem der vorhergehenden Ansprüche, sofern er nicht von Anspruch 5 abhängig ist, **dadurch gekennzeichnet, dass** die Steuereinheit (20) ausgebildet ist, vor Durchführung des Abtauzyklus den Kompressor (2) ineffizient zu betreiben, um diesen aufzuheizen.

## Claims

1. Refrigerating and/or freezing apparatus with a heat-insulated apparatus body which encloses an interior space, and with a heat pump, by means of which the interior can be cooled, wherein the heat pump is a refrigerant circuit (10) with compressor (2), condenser (3), throttle and evaporator (7), wherein the compressor (2) is a speed-controlled compressor (2) which can be operated at variable speed, wherein the throttle is an expansion valve (6) with a controllable flow cross section, and wherein the apparatus comprises a control unit (20) which is connected to the speed-controlled compressor (2) and the controllable expansion valve (6), wherein the control unit (20) is configured to perform a defrosting cycle in which the compressor (2) is operated at low speed and the expansion valve (6) is set to a large flow cross section in order to direct warm refrigerant into the evaporator (7) and to keep or avoid the amount of refrigerant evaporation in the evaporator (7) low,
**characterized in that** the control unit (20) is configured to initiate a rest phase after performance of the defrosting cycle when the compressor is at a stillstand, before the cooling operation is resumed.

2. Refrigerating and/or freezing apparatus according to claim 1, **characterized in that** the refrigerant circuit (10) does not have a bypass line which leads from the compressor (2) past condenser (3) and/or throttle directly to the evaporator (7).

3. Refrigerating and/or freezing apparatus according to one of the preceding claims, **characterized in that** the apparatus comprises a condenser fan (8) which is arranged outside the interior space and which during operation can act on the condenser (3) with an air flow, wherein the condenser fan (8) is connected to the control unit (20) and wherein the control unit (20) is configured not to operate the condenser fan (8) during the defrosting cycle.

4. Refrigerating and/or freezing apparatus according to one of the preceding claims, **characterized in that** the apparatus comprises an evaporator fan (9) which is arranged in the interior and which can act on the evaporator (9) with an air flow during operation, wherein the evaporator fan (9) is connected to the control unit (20) and wherein the control unit (20) is configured not to operate the evaporator fan (9) during the defrosting cycle.

5. Refrigerating and/or freezing apparatus according to one of the preceding claims, **characterized in that** the control unit (20) is configured to heat the compressor (29) before or during the defrosting cycle by inefficient operation or power supply at a standstill.

6. Refrigerating and/or freezing apparatus according to one of the preceding claims, **characterized in that** the apparatus comprises a temperature sensor (7a) for determining the evaporator temperature, preferably the surface temperature of the evaporator (7), which is connected to the control unit.

7. Refrigerating and/or freezing apparatus according to one of the preceding claims, **characterized in that** the apparatus additionally comprises an electric defrosting heater (7b), preferably an electric resistance heater at the evaporator and/or at one or more points tending to icing, in particular at the dew water outlet, which is connected to the control unit (20).

8. Refrigerating and/or freezing apparatus according to claim 7, **characterized in that** the control unit (20) is configured to regulate the operation of the resistance heating in such a way that it is additionally activated during the defrosting cycle, preferably when the evaporator temperature reached does not meet one or more criteria stored in the control unit (20).

9. Refrigerating and/or freezing apparatus according to one of the preceding claims, as long as not being dependent on claim 5, **characterized in that** the control unit (20) is configured to operate the compressor (2) inefficiently in order to heat it before carrying out the defrosting cycle.

## Revendications

1. Appareil de réfrigération et/ou de congélation avec un corps d'appareil isolé thermiquement, qui renferme un espace intérieur, et avec une pompe à chaleur, à l'aide de laquelle l'espace intérieur peut être refroidi, dans lequel la pompe à chaleur est un circuit frigorifique (10) avec un compresseur (2), un condenseur (3), un élément d'étranglement et un évaporateur (7), dans lequel le compresseur (2) est un compresseur (2) à vitesse de rotation régulée, qui peut fonctionner avec une vitesse de rotation variable, dans lequel l'élément d'étranglement est une valve d'expansion (6) avec une section transversale d'écoulement pouvant être régulée, et dans lequel l'appareil présente une unité de commande (20), qui est reliée au compresseur (2) à vitesse de rotation régulée et à la valve d'expansion (6) pouvant être régulée, dans lequel l'unité de commande (20) est réalisée pour mettre en oeuvre un cycle de dégivrage, dans lequel le compresseur (2) fonctionne à une vitesse de rotation basse et la valve d'expansion (6) est placée sur une grande section transversale d'écoulement pour acheminer de l'agent frigorigène chaud dans l'évaporateur (7) et pour maintenir à un niveau modéré l'ampleur de l'évaporation d'agent frigorigène dans l'évaporateur (7) ou pour l'éviter,
**caractérisé en ce que** l'unité de commande (20) est réalisée pour initier une phase de repos lors de l'arrêt du compresseur après avoir mis en œuvre le cycle de dégivrage avant que le mode de refroidissement ne reprenne.

2. Appareil de réfrigération et/ou de congélation selon la revendication 1, **caractérisé en ce que** le circuit frigorifique (10) ne présente aucune conduite de dérivation qui mène depuis le compresseur (2) directement à l'évaporateur (7) en passant le long du condenseur (3) et/ou de l'élément d'étranglement.

3. Appareil de réfrigération et/ou de congélation selon l'une quelconque des revendications précédentes, **caractérisé en ce que** l'appareil présente un ventilateur de condenseur (8) disposé à l'extérieur de l'espace intérieur, qui peut soumettre, en fonctionnement, le condenseur (3) à l'action d'un flux d'air, dans lequel le ventilateur de condenseur (8) est relié à l'unité de commande (20) et dans lequel l'unité de commande (20) est réalisée pour ne pas faire fonctionner le ventilateur de condenseur (8) pendant le cycle de dégivrage.

4. Appareil de réfrigération et/ou de congélation selon l'une quelconque des revendications précédentes, **caractérisé en ce que** l'appareil présente un ventilateur d'évaporateur (9) disposé dans l'espace intérieur, qui peut soumettre, en fonctionnement, l'évaporateur (9) à l'action d'un flux d'air, dans lequel le ventilateur d'évaporateur (9) est relié à l'unité de commande (20) et dans lequel l'unité de commande (20) est réalisée pour ne pas faire fonctionner le ventilateur d'évaporateur (9) pendant le cycle de dégivrage.

5. Appareil de réfrigération et/ou de congélation selon l'une quelconque des revendications précédentes, **caractérisé en ce que** l'unité de commande (20) est réalisée pour réchauffer à l'arrêt le compresseur (2) avant ou pendant le cycle de dégivrage par un fonctionnement inefficace ou une alimentation en courant.

6. Appareil de réfrigération et/ou de congélation selon l'une quelconque des revendications précédentes, **caractérisé en ce que** l'appareil présente une sonde de température (7a) pour déterminer la température de l'évaporateur, de préférence la température de surface de l'évaporateur (7) qui est relié à l'unité de commande (20).

7. Appareil de réfrigération et/ou de congélation selon l'une quelconque des revendications précédentes, **caractérisé en ce que** l'appareil présente, sur l'évaporateur et/ou sur un ou plusieurs emplacements ayant tendance à givrer, en particulier sur l'évacuation d'eau de dégivrage, en supplément un dispositif électrique de dégivrage par chauffage (7b), de préférence un dispositif électrique de chauffage à résistance, qui est relié à l'unité de commande (20).

8. Appareil de réfrigération et/ou de congélation selon la revendication 7, **caractérisé en ce que** l'unité de commande (20) est réalisée pour réguler le fonctionnement du dispositif de chauffage à résistance de telle sorte qu'il est activé en supplément pendant le cycle de dégivrage, de préférence alors que la température d'évaporateur atteinte ne remplit pas un ou plusieurs critères enregistrés dans l'unité de commande (20).

9. Appareil de réfrigération et/ou de congélation selon l'une quelconque des revendications précédentes, dans la mesure où elle n'est pas dépendante de la revendication 5, **caractérisé en ce que** l'unité de commande (20) est réalisée pour faire fonctionner de manière inefficace le compresseur (2) avant la mise en œuvre du cycle de dégivrage pour chauffer celui-ci.
